# EUROPEAN PATENT SPECIFICATION

(11) **EP 2 640 051 B1**
(45) Date of publication and mention of the grant of the patent: **01.08.2018**
(21) Application number: 13158183.7
(22) Date of filing: 07.03.2013
(51) Int. Cl.: H04M 7/12

(54) **Packetising DTMF signals**
Packetierung von DTMF-Signalen
Paquetage de signaux DTNF

(30) Priority: 14.03.2012 US 201213419637; 19.07.2012 EP 12177134
(43) Date of publication of application: 18.09.2013
(73) Proprietor: Mitel Networks Corporation, Ottawa, ON K2K 2W7 (CA)
(72) Inventor: Prodanovic, Radovan, Kanata, Ontario K2M 2V5 (CA)
(74) Representative: Derry, Paul Stefan

(56) References cited:
- WO-A1-01/28256
- WO-A1-96/32817
- CA-C- 2 171 485

## Description

This disclosure generally relates to communications, and more particularly, to preventing double digit detection in a downstream circuit-switched network caused by in-band dual-tone multi-frequency (DTMF) leaks when the voice path goes through a packet-switched network and out-of-band DTMF is used within the packet-switched network.

DTMF signalling is used in telecommunications as a form of signalling over analogue and digital telephone lines in the voice-frequency band between telephone handsets and other communication devices, as well as between communication devices without human involvement. DTMF signalling and the protocols based on the DTMF signalling were designed to work well in circuit-switched networks, where both the voice and the DTMF share the same frequency band but cannot go through at the same time. Thus, the DTMF signalling in circuit-switched networks is said to be carried in-band. The sending endpoint generates DTMF tones. The receiving endpoint, when required, listens for the DTMF tones by deploying a device called a DTMF detector, a device that detects DTMF tones and reports them to call control.

To guard against false signal detection, for example voice detected as a DTMF tone, DTMF detectors have to be configured not to recognize DTMF signals whose duration is below a certain minimum. To guard against erroneous double digit detection, if a signal is interrupted by a short break in transmission or by a noise pulse and once the DTMF digit detection has started, interruptions shorter than a specified minimum must not be recognized by DTMF detectors. As an example of double digit detection, when a sending endpoint sends DTMF signals "123456789", the DTMF detector at the receiving endpoint could detect and report "11234556678899".

If the DTMF has to go through a packet-switched network, it can be carried either in-band or out-of-band. When DTMF signalling is carried in-band through a packet-switched network, the DTMF is treated as voice and the DTMF signalling goes through the packet network undetected. There are several issues with carrying DTMF signalling in-band through packet-switched networks. First, only some voice codecs, for example G711, can encode the DTMF signal accurately. Most compression algorithms would change the signal in such a way that it cannot be detected reliably after decoding. This means that packet-switched networks would not be able to take advantage of voice compression when DTMF signalling is required in a call. Second, packet jitter, packet delay, and/or packet loss, all of which are inherently present in packet-switched networks, can cause breaks in DTMF signals that are longer than the accepted minimum. As a result, DTMF detectors could interpret such DTMF signals either as double digits or digits can go undetected all together.

To avoid those issues described above, a more reliable method for carrying DTMF through packet-switched networks is devised whereby DTMF signals are detected via DTMF detectors at the ingress of the packet-switched network and then sent as special DTMF signalling packets into the packet-switched network, either as a substitute for the in-band DTMF, or concurrently with the packetized in-band DTMF, and thus the name out-of-band DTMF. One example of a packet-switched network is an IP network and an example of a protocol used to transport voice through an IP network is RTP, specified in IETF documents RFC3550/RFC3551, and RFC4733, that describes how to carry DTMF signalling, other tone signals and telephony events in RTP packets, that is, out-of-band.

The process of detection of DTMF signals takes a finite amount of time. Once a DTMF signal is detected, the DTMF detector reports this event to call control. It takes a certain amount of time for this to be processed by call control and for out-of-band DTMF signalling packets to begin to be injected. During this time the in-band DTMF continues to be carried through and represents in-band DTMF leak.

If a call carrying out-of-band DTMF signalling is terminated within the packet-switching network, the receiving endpoint within this network consumes the special DTMF signalling packets, for example RFC4733 RTP packets, and the DTMF signalling stays in out-of-band form. The leaked through in-band DTMF does not impact the ability of the receiving endpoint to recognize and interpret the out-of-band DTMF signalling packets and to act upon them. Even though the leaked in-band DTMF could be heard at the receiving endpoint, this does not impact the signalling decisions of the receiving endpoint because the receiving endpoint acts upon the out-of-band DTMF signals rather than upon the in-band DTMF signals.

If, on the other hand, the packet-switching network is just an intermediate network and the call has to be routed back into a circuit-switched network to reach its receiving endpoint, the out-of-band DTMF signalling has to be converted back to in-band DTMF form at the egress of the packet-switching network before it can be inserted into the circuit-switched network. Now a mix of the leaked in-band DTMF and the regenerated in-band DTMF is used. Depending on the amount of the leaked in-band DTMF, its relative position and phase to the regenerated in-band DTMF, and characteristics of the downstream DTMF detector, either the one at the receiving far endpoint or another intermediate one, the DTMF detector can interpret this as a double digit.

A need therefore exists for a system preventing double digit detection caused by in-band DTMF signalling and methods thereof that overcome those issues described above. These, as well as other related advantages, will be described in the present disclosure.

WO01/28256 discloses DTMF removal in an IP network. A control register comprises a DTMF early detection flag bit EDET which is indicative of the status of detection of a potential DTMF signal. A digital processor sets the status bit EDET when DTMF signal energy is detected to indicate that the received signal is probably a DTMF signal. A DTMFD flag bit is set by the digital processor when a DTMF signal has been detected that satisfies all of the DTMF detection criteria. When the digital processor sets the DTMFD flag bit, it resets the EDET flag bit. When the EDET flag bit is not set, RTP packets assembled by the microcontroller are promptly coupled to a network interface for transmission over the IP network as the data portion of UDP packets over IP. When the EDET flag bit is set, RTP packets assembled by the microcontroller are temporarily stored in memory while the digital processor continues to process the signal to verify whether it is a valid DTMF signal. If the EDET flag bit is reset, and the DTDET flag bit is not set, the RTP packets temporarily stored in the memory are promptly coupled to the network interface for transmission over the IP network. If the DTDET flag bit is set, the RTP packets temporarily stored in the memory are discarded and a control packet containing information indicative of characteristics of a DTMF signal is prepared and coupled to the network interface for transmission over the IP network.

The novel features believed to be characteristic of the disclosure are set forth in the appended claims. In the descriptions that follow, like parts are marked throughout the specification and drawings with the same numerals, respectively. The drawing Figures are not necessarily drawn to scale and certain Figures can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
Figure 1 is a block diagram illustrating in-band DTMF leaks causing double digit detections in a downstream circuit-switched network caused by in-band DTMF leaks when the voice path goes through a packet network and out-of-band DTMF is used within the packet network in accordance with one or more aspects of the present disclosure;
Figure 2 is a block diagram depicting typical components of a TDM to IP and/or IP to TDM voice call in accordance with one or more aspects of the present disclosure;
Figure 3 is a flow chart showing illustrative procedures for initializing a T2P delay buffer in accordance with one or more aspects of the present disclosure;
Figure 4 is a flow chart showing illustrative procedures for packet processing within a T2P data/voice path in accordance with one or more aspects of the present disclosure; and
Figure 5 is a block diagram depicting illustrative procedures for assembling packets for a T2P delay buffer in accordance with one or more aspects of the present disclosure.

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the scope of this invention.

Generally described, the present disclosure relates to communications, and more particularly, to a system preventing double digit detection caused by in-band DTMF signalling and methods thereof. In an illustrative embodiment, a T2P delay buffer is provided. The T2P delay buffer can prevent double digit detections caused by in-band DTMF leak when out-of-band DTMF is used. During call setup, if the DTMF detection is required, the T2P delay buffer is initialized with an audio pattern that represents silence in a configurable amount of delay that can be dependent on the amount of time it takes to detect the DTMF digit. If the DTMF detection is not required, the T2P delay buffer is initialized with zero delay. After the call setup, the voice path can be established. When a DTMF digit is detected in the voice path, the system can stop taking the voice payload from the T2P delay buffer and start injecting RFC4733 RTP packets into the RTP stream at a pre-configured rate, thereby leaving most or all of the audio payload that contains the beginning of the detected in-band DTMF tone in the T2P delay buffer. The RFC4733 DTMF RTP packets continue to be injected into the RTP stream until the in-band DTMF digit is detected to have stopped. Once the end of the DTMF digit is detected, the content of the T2P delay buffer can be discarded and the T2P delay buffer is reinitialized with an audio pattern that represents silence in a configurable amount of delay. The configured amount of delay can be dependent on the amount of time it takes to detect the DTMF digit. After the T2P delay buffer is reinitialized, the voice packetisation can be continued. Note that if the requirement to detect the DTMF signals is no longer active, the T2P delay buffer can be initialized with no delay added to it, thus reducing the round trip delay when the DTMF detection is not needed.

A number of advantages can be offered by the illustrative embodiment described above. The system can be less susceptible to jitter, delay and packet loss than previous networks and systems. Because a cause of double digit detection, in the context of the scenario described above, is addressed at the source of the DTMF signal leak, on the TDM to packet side (T2P) at the ingress of the packet-switched network, some constraints on certain components on the packet to TDM side (P2T) can be relaxed.

Firstly, and by way of a non-limiting illustration, the initial play-out delay of the jitter buffer on the P2T side can be decreased or even eliminated.

Secondly, also by way of a non-limiting illustration, because the amount of delay added to the T2P delay buffer is configurable, if enough delay is added to the T2P delay buffer, the leaked in-band DTMF can be completely eliminated, which can be important in applications that require DTMF suppression, that is, elimination of the in-band DTMF signals from the audio path. However, the amount of delay added to the T2P buffer can be selected to be so low that DTMF is not completely eliminated, but instead allows some in-band DTMF to leak through. As long as the amount of DTMF that leaks through is not sufficient to cause DTMF detection at the far end circuit switched network (packet to TDM side), this avoids double digit detection. However, it allows this to be achieved with less latency or delay, thus improving overall voice quality, compared to the case where DTMF is completely removed.

Compared to WO01/28256, DTMF removal according to embodiments of this invention is performed quite differently. In brief, the embodiments involve initialising a delay buffer with a configurable amount of delay, and taking audio from the delay buffer and instead injecting DTMF signalling packets when a DTMF digit is detected. Conceptually, embodiments of this invention can be described as buffering audio in a delay buffer and, if DTMF is detected (actually detected, not just possibly detected), substituting the buffered audio for DTMF signalling packets.

The difference in operation between this invention and WO01/28256 is significant and impacts on system performance in two ways.

Firstly, WO01/28256 can provide lower latency during operation because of the absence of the configured delay buffer. In WO01/28256, there is no intentional buffering at all unless potential DTMF is detected. In the embodiments in this specification, the delay buffer provides some latency whether or not DTMF is detected. The amount of latency depends on the configuration of the delay buffer.

Secondly, there is a difference in jitter. This is the case because in the embodiments of the invention either buffered audio or DTMF signalling is transmitted continually at the pre-configured rate, whereas in WO01/28256 packets are held from transmission when DTMF is possibly detected and buffered audio or DTMF signalling is transmitted only after it is determined whether or not there is a valid DTMF tone and thereby causing jitter. Thus, the embodiments of the present invention can provide no jitter, and certainly can provide much less jitter than D1. This is significant because jitter can require the provision of an adaptive jitter buffer at the receiver to allow gradual absorption of the added delay caused by jitter.

Many additional advantages of the present disclosure will become apparent to those skilled in the relevant art as provided for in the following description.

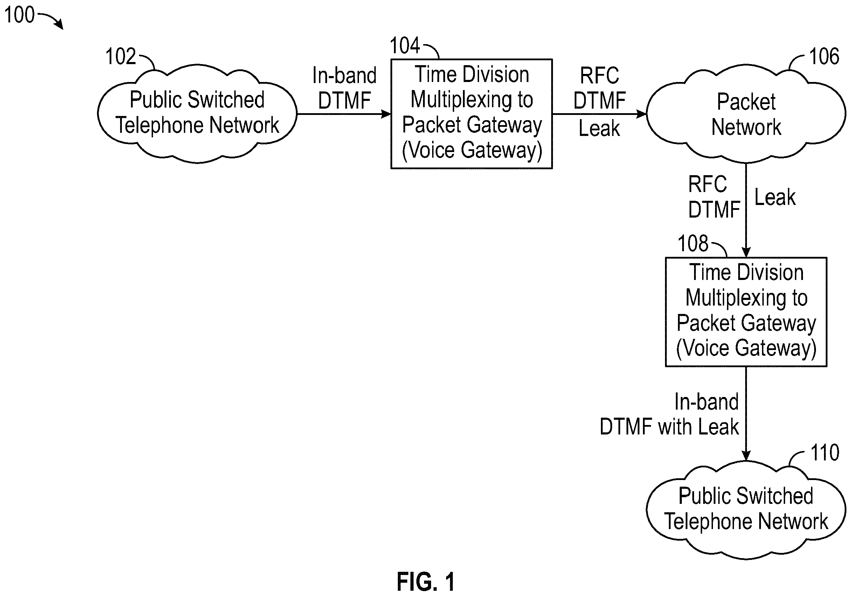

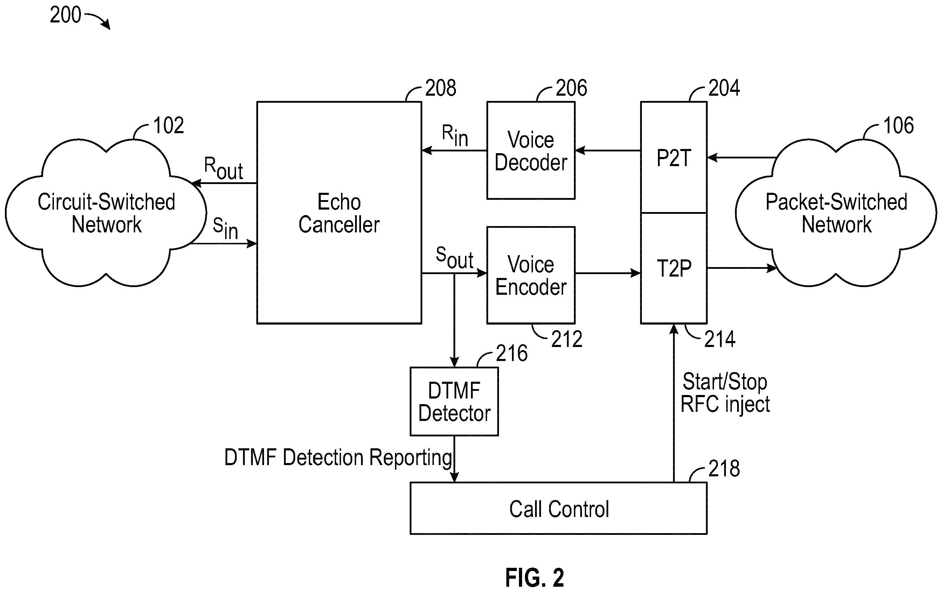

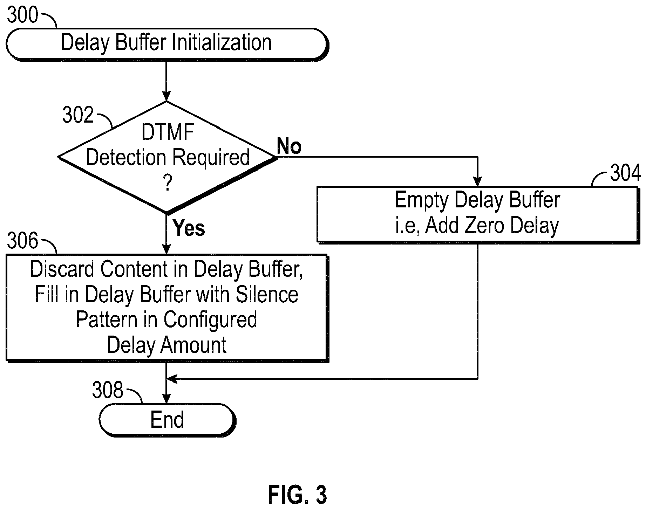

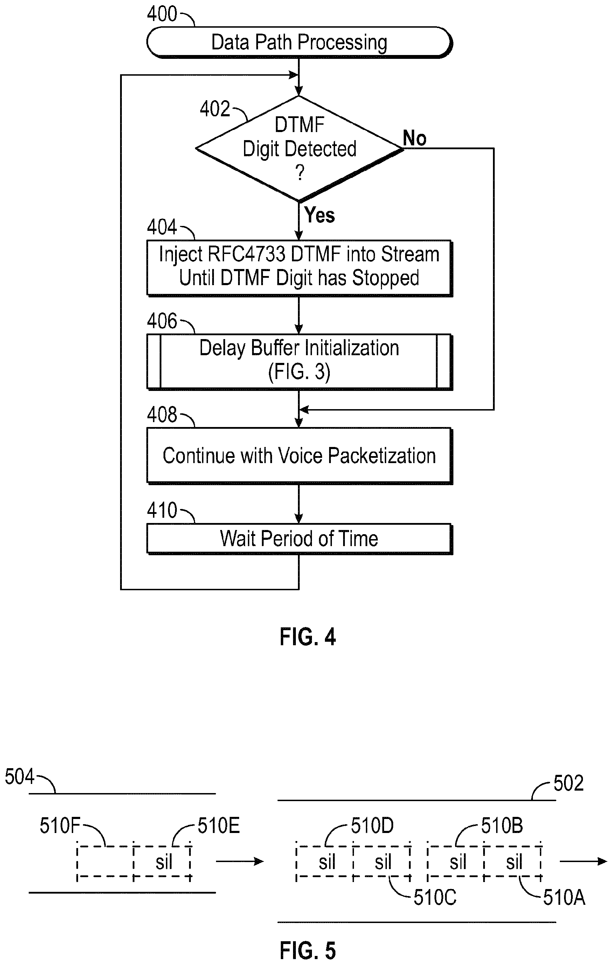

An exemplary environment for double digit detection caused by in-band DTMF is provided in Figure 1. Figure 2 shows one embodiment of preventing double digit detection. Figures 3 and 4 depict flow charts for minimizing/eliminating in-band DTMF leak at the source of the leak, and thus preventing double digit detection in the context of the scenario described above. Figure 5 shows processing of packets within the T2P delay buffer. These Figures are not intended to be limiting, but rather provided to disclose features and concepts herein. Within the present disclosure, the T2P delay buffer can be referred to as an output queue. The T2P delay buffer can also be referred to as an egress packet queue. The T2P delay buffer can be implemented within hardware, software or combination of both.

Figure 1 is a block diagram illustrating in-band DTMF leaks causing double digit detections in a downstream circuit-switched network caused by in-band DTMF leaks when the voice path goes through a packet network and out-of-band DTMF is used within the packet network in accordance with one or more aspects of the present disclosure. Double digit issues arise when the voice path goes through a packet network 106 and when out-of-band DTMF signalling is used. As an example of double digit detection, when a caller dials "123456789", software can detect "11234556678899".

To carry DTMF signalling over a packet network 106 reliably, the in-band DTMF signalling coming from a Public Switched Telephone Network (PSTN) 102 (circuit switched network) is converted into RFC4733 DTMF. By converting the in-band DTMF, the system 100 makes the DTFM signal less susceptible to jitter, delay and packet loss that is present in packet networks. Because the substitution of the in-band DTMF with RFC4733 DTMF takes a finite amount of time to detect the in-band DTMF digit by the time division multiplexer (TDM) to packet gateway 104, or voice gateway, a certain amount of the in-band DTMF leaks through at the source to the packet network 106, that is, at the TDM to internet protocol (IP) interface and gets carried together with the RFC DTMF through the packet network 106.

The leaked in-band DTMF is then provided to the TDM to packet gateway 108 (voice gateway) by the packet network 106. The in-band DTMF is regenerated from the RFC4733 DTMF at the egress of the packet-switching network 106, for example, the receiver propagates tone signalling accurately into the PSTN 110 for machine consumption. In this scenario, it is possible that the leak gets interpreted as a double digit by a far end device if the amount of leaked in-band DTMF is sufficient. Previously, if RFC4733 DTMF in TDM-IP-TDM scenarios 100 were enforced, whether or not the leaked in-band DTMF made it back into the PSTN 110 (circuit-switched network), depended on the amount of delay in the jitter buffer implemented by P2T in the TDM to packet gateway 108. If the amount of accumulated audio in this jitter buffer was large enough, the leaked in-band DTMF would not be played out because the P2T would receive the RFC4733 DTMF packet and start regenerating the in-band DTMF which would preempt playing the accumulated audio from the jitter buffer. In P2T there are basically two queues, one for audio payload, the so called jitter buffer, and one for the DTMF digits. The P2T processes RFC4733 DTMF at a higher priority compared to the audio payload. So when there is enough audio payload accumulated in the P2T jitter buffer and the in-band DTMF that leaked into the audio stream is at the tail end of the P2T jitter buffer, the received RFC4733 DTMF digits could be played out before the accumulated audio that contains the leaked in-band DTMF. Proper handling of the RFC4733 DTMF assumes that the P2T audio jitter buffer gets emptied after the RFC4733 DTMF digits are processed. So the amount of the accumulated delay in the TDM to packet gateway voice path P2T jitter buffer can be enough to mask the leaked in-band DTMF.

Nevertheless, in packet voice applications it is important to minimize delay in the voice path. The lower the delay, the less expensive the echo cancelling. This translates to lower cost and greener products in terms of energy consumption. Therefore a goal is to decrease the P2T delay, and minimize or eliminate the amount of delay needed in the P2T jitter buffer. In the past, there was no buffering on the T2P path, that is, there was no added delay in the T2P direction. Now, with the decreased buffering in the P2T direction, the P2T would underflow more frequently. In underflow conditions, the P2T can inject silence or perform a more sophisticated packet loss concealment algorithm. For the audio, this typically does not cause any perceivable impact. If, however, the P2T underflow happens during the play out of the leaked in-band DTMF, the in-band DTMF can be interrupted. This in some cases can cause the double digit detection by the next in chain DTMF detector.

DTMF detection has been implemented on far end T2Ps in TDM-IP-TDM scenarios, for example a toll bypass application, to help generate DTMF on the near end more reliably so that network jitter would not result in double digits if the DTMF would be carried in-band. Now that the RTP receiver has to regenerate TDM DTMF from the RFC4733 DTMF, the excessive amount of the leaked in-band DTMF, even when it ends up back-to-back with the regenerated DTMF, can have a different phase compared to the regenerated DTMF and some DTMF detectors, that are sensitive to the phase, would treat this as two separate digits. Experiments have shown that on an idle system, with a packet time set to ten (10) milliseconds and a DTMF detection report time of forty-eight (48) milliseconds, and no added delay in the T2P voice path, the in-band DTMF leak can be in the amount of up to seventy (70) milliseconds.

In Figure 1, the T2P 104 created an in-band DTMF leak. DTMF in its native form is in audio that can be received from a PSTN 102. RFC4733 DTMF, or the like, was created to make the packet stream DTMF-aware. The in-band DTMF signals from the PSTN 102 are replaced with out-of-band DTMF signals that the packet network 106 knows how to process and deal with. DTMF digits can be detected within the incoming audio. A finite amount of time is required to detect the DTMF digit. Because of this lag, packetized data that should have been abandoned can be "leaked". After the in-band DTMF leak goes through the packet network 106 and the TDM to packet gateway P2T 108, a far end device on the PSTN 110 can receive in-band DTMF having the leaked in-band DTMF and in-band DTMF regenerated out of the RFC4733 out-of-band DTMF. Because of the leaked in-band DTMF, it is possible that the device on the PSTN 110 can detect a double digit.

Turning now to Figure 2, a block diagram depicting typical components of a TDM to IP (circuit-switched network 102 to packet-switched network 106) and/or IP to TDM (packet-switched network 106 to circuit-switched network 102) voice call in accordance with one or more aspects of the present disclosure is shown. In-band DTMF Sin can be provided by the circuit-switched network 102 to the T2P 214, which can represent a component of a TDM to packet voice gateway 104. Sin can include both voice and DTMF as they can share the same frequency band but generally not at the same time.

From the circuit-switched network 102, Sin can be received by the echo canceller 208 where the voice quality within Sin can be improved. The output Sout of the echo canceller 208 can in turn be sent to a voice encoder 212. At the same time, the same output Sout of the echo canceller 208 can be sent to a DTMF detector 216. The DTMF detector serves a function of detecting in-band DTMF and reporting to the call control 218 when a DTMF digit gets detected, so as to avoid said issues with carrying DTMF signalling in-band through packet-switched networks. At the voice encoder 212, the output Sout of the echo canceller 208 can be either passed through as is to the T2P 214 or it can be compressed and converted for use by the T2P 214. A delay buffer 502 and 504, shown in Figure 5, can be placed within T2P 214 providing a delay for the audio payload before packets are sent to the packet-switched network 106 through the T2P 214 to allow the DTMF digit detection to be performed.

In operation, the DTMF detector 216 can determine whether a DTMF digit is within Sout. A minimum amount of time is generally required before a digit can be detected within the in-band DTMF resulting in Sout going through the voice encoder 212 and to the T2P 214, and stored within the delay buffer 502. By way of a non-limiting example, after a time of forty-eight (48) milliseconds, the DTMF detector 216 can definitely say that a digit has been detected within Sout. The minimum duration below which a DTMF digit should typically not be recognized by the DTMF detector 216 can be between twenty (20) milliseconds to twenty-five (25) milliseconds. The minimum duration above which a DTMF digit can be recognized is forty (40) milliseconds and the minimum signal interruption below which the digit should not be recognized as a new digit is between ten (10) milliseconds and twenty (20) milliseconds.

After detection of a DTMF digit, the DTMF detector 216 can provide a DTMF detection report to the call control 218 indicating that DTMF digit has been detected. The call control 218 can be alerted that a digit has been detected and processing of the digit should be handled. When a DTMF digit is detected, the call control 218 of the system 200 can signal T2P 214 to start injecting RFC 4377 RTP packets representing the detected DTMF digit. The T2P 214 can then stop taking the voice payload from the delay buffer 502 and 504 within the T2P 214 and start injecting RFC4733 RTP packets into the RTP stream at a pre-configured rate, thereby leaving most or all of the audio payload that contains the beginning of the detected in-band DTMF tone in the T2P delay buffer 502.

At the end of the DTMF digit, the DTMF detector 216 can also provide an additional DTMF detection report to the call control 218. The RFC4733 DTMF RTP packets can continue to be injected into the RTP stream until the DTMF digit stops. Once the end of the DTMF digit is detected, the content of the delay buffer 502 and 504 in the T2P 214 can be discarded and the T2P delay buffer 502 and 504 can be reinitialized with an audio pattern that represents silence in a configurable amount of delay. The configured amount of delay can be dependent on the amount of time it takes to detect the DTMF digit. After the T2P delay buffer 502 and 504 is reinitialized, the voice packetisation of the audio can be continued. If the requirement to detect the DTMF signals is no longer active, the T2P delay buffer 502 and 504 can be initialized with no delay added to it. The call control 218 can determine the amount of audio that can be removed from the audio stream once a DTMF digit is detected. A delay buffer 502 can provide a certain amount of delay into the stream removing the possibilities of double digit detection. The content of the delay buffer 502 and 504 can be discarded so the in-band DTMF does not get leaked to the receiving far end device.

The T2P delay buffer 502 along with the DTMF detector 216 and call control 218 can remove the leaked in-band DTMF previously described, which led to the possibility of double digit detections.

On the egress side coming from the packet-switched network 106, the in-band DTMF is regenerated from the RFC4733 DTMF either at the voice decoder 206 (when the voice is compressed) or at the P2T 204 (if the voice decoder 206 is a pass through). The voice decoder 206 can uncompress and convert the in-band DTMF Rin for use by the echo canceller 208. The echo canceller 208 can improve the voice quality within Rin to Rout and provide Rout to the circuit switched network 102. The play-out delay of the jitter buffer (not shown) in the P2T 204 can be decreased or even eliminated because the T2P 214 can decrease the amount of leaked in-band DTMF to the point that the DTMF remaining in the stream is not sufficient to cause DTMF detection at the far end TDM side, which is 102 in this case.

Figure 3 is a flow chart showing illustrative procedures for initializing a T2P delay buffer 502 in accordance with one or more aspects of the present disclosure. The delay buffer 502 can be used to provide a configured amount of delay to prevent double digit detection by a DTMF detector 216 in the circuit-switched network 110. The delay buffer 502 can prevent double digit detection caused by in-band DTMF leak when the voice path goes through a packet-switched network 106 and when using RTP and RFC4733 by controlling the amount of leak at the source of the leak, that is, on the T2P 214. By limiting the amount of in-band DTMF that leaks from the T2P 214, double digit detection can be prevented.

The processes for initialization of the delay buffer 502 can begin at block 300.

At decision block 302, the system 200 can determine whether DTMF detection is required. The decision to detect DTMF can be based on a number of factors such as whether other components can handle the in-band DTMF leak. When DTMF detection is not required, or put another way the DTMF requirement is absent, at block 304, the delay buffer can be emptied, that is, a zero delay can be added to the buffer 502. When, however, DTMF detection is required, the call control 218 can configure then initialize the delay buffer 502. This can involve discarding the contents of the delay buffer 502 and then initializing by filling in the delay buffer 502 with a silence pattern in a configured delay amount. The configured delay amount dictates the amount of audio that is buffered at the T2P 214. This parameter is the same as the delay between audio arriving at and leaving from the T2P 214. In general, if the delay is longer than the DTMF detection time, the in-band DTMF can be completely eliminated because the buffer contents corresponding to all times when DTMF was present are discarded. To completely eliminate the in-band DTMF, the amount of needed delay can also depend on the configured packetization time: the higher the packetization time, the longer the delay is needed.

The initialization processes can end at block 308.

Figure 4 is a flow chart showing illustrative procedures for packet processing within a T2P data/voice path 104 in accordance with one or more aspects of the present disclosure. The processes can illustrate what happens in the data path as well as the voice path. Typically, these processes are repeated each tick time, for example, ten (10) milliseconds. The processes can begin at block 400. At decision block 402, a determination can be made whether a DTMF digit has been detected by the DTMF detector 218.

If a DTMF digit has not been detected, the T2P 214 can continue with voice packetisation of incoming TDM voice at block 408. This can involve dequeuing and transmitting packets from the head end of the delay buffer 502 at a preconfigured, constant rate. Dequeuing and transmitting of packets is continued while a received DTMF digit is being detected, but before the DTMF digit is actually detected. Thus jitter is not introduced. When a DTMF digit has been detected, at block 402, the T2P 214 can inject RFC4733 DTMF into the stream until the DTMF digit has stopped, at block 404. Detecting a DTMF digit can involve confirming the presence of a DTMF digit, not merely detecting that a DTMF digit possibly is present. At block 406, the T2P 214 can use the delay buffer initialization processes as described in Figure 3, where contents within the delay buffer are discarded and the delay buffer 502, 504 is filled with the preconfigured amount of delay. After a DTMF digit has been detected, RFC4733 DTMF signalling packets for the DTMF digit are injected instead of the packetized received audio. This continues until the received DTMF digit stops.

Block 406 can be performed when the DTMF digit is detected, when the end of the DTMF digit detected, or at any time between the DTMF digit being detected and the end of the DTMF digit being detected.

At block 408, voice packetisation can be continued by restarting packetisation of the received audio into the delay buffer 502 and 504. At block 410, the system 200 can wait for a period of time. This time can be configured based on the requirements of the system 200, for example, ten (10) milliseconds. Control can then be provided back to decision block 402.

Through those processes described above, the delay buffer 502 can be cleared of in-band DTMF leak and filled with a silence pattern to avoid double digit detection. If the delay time introduced by the delay buffer 502 and 504 is sufficiently large that DTMF was detected before any packets containing DTMF were transmitted, the in-band DTMF can be eliminated. In general, if the delay time introduced by the delay buffer is below the DTMF detection time, some DTMF could have leaked out before DTMF was detected. As long as the duration of leaked DTMF is less than the minimum time for the DTMF to be recognized as a valid digit at the far end TDM side, double digit detection is prevented.

Referring to Figure 5, a block diagram depicting illustrative procedures for assembling packets 510A, 510B, 510C, 510D, 510E and 510F (collectively packets 510) for a T2P delay buffer 502 in accordance with one or more aspects of the present disclosure is shown. As described above, the DTMF digit detection delay can require the use of a delay buffer 502 that can be within the T2P 214. The T2P 214 can assemble packets 510 in an assembly area 504 at the rate Ri, represented as a single box. Ri can be ten (10) milliseconds, that is, each packet 510 can represent ten (10) milliseconds of TDM voice/data. Other rates can be used, for example, five (5) or twenty (20) milliseconds, however, the minimum rate cannot be below the minimum supported outgoing packet rate in milliseconds.

An enquing rate Re is a rate at which packets 510 are being provided to the delay buffer 502, while a dequeuing rate Rd is a rate at which packets 510 are being processed out of the delay buffer 502. Ptime can represent the outgoing packet rate in milliseconds. In a non-limiting example, Ptime can be from ten (10) milliseconds to eighty (80) milliseconds in steps of ten (10) milliseconds. Because Ptime and Ri can differ, rate adaption is performed on the packet 510 being assembled Pa 510E and 510F within the assembly area 504. When the packet Pa 510E and 510F reaches Ptime, it can get queued from the assembly area 504 onto the delay buffer 502. The example in Figure 5 demonstrates a case where Ptime can be twenty (20) milliseconds and the configured DTMF detection report time can be forty-eight (48) milliseconds, and consequently the added T2P 214 delay can be fifty (50) milliseconds.

The amount of the delay added to the delay buffer 502 can be configurable on a per call basis and can depend on whether DTMF detection is required and the configured DTMF digit detection report time. For queue initialization, as shown above, if the DTMF detection is not required, the amount of added delay can be zero (0) milliseconds. When the TDM to packet stream is opened, the silence pattern can be queued onto the delay buffer 502 in the amount of the configured delay, Ptime per packet. In one embodiment, the remaining amount of the required delay gets added to a packet Pa 510E and/or 510F being assembled.

When a DTMF digit gets detected, the system stops assembling packets 510 in the assembly area 504 and stops both enqueuing packets 510 to the delay buffer 502 and dequeuing packets 510 from the delay buffer 502, thus minimizing/preventing the in-band DTMF leak, or at least keeping it below the minimum duration for DTMF to be detected as a valid digit at the far end TDM side. The detected DTMF digits start getting injected into the RTP packet stream in the form of RFC4733 DTMF, for example, to the stream leading into the packet switched network 106. When the end of the in-band DTMF digit gets detected, injection of RFC4733 DTMF can stop. A silence pattern referred to as "sil" can get queued onto the delay buffer 502 in the amount of the configured of delay, Ptime per packet. Any remaining amount of the required delay gets added to an assembled packet Pa 510E or 510F in the assembly area 504. The system then restarts the process of assembling packets 510 in the assembly area 502 and restarts both enqueuing packets 510 to the delay buffer 502 and dequeuing packets 510 from the delay buffer 502.

The minimum size of the delay buffer 502, in terms of number of packets 510 that the delay buffer 502 has to accommodate, can depend on a maximum required delay to be inserted and Ri. Assuming that a practical value for the inserted delay is a multiple of Ri, then the minimum number of packets that the delay buffer 502 has to accommodate is a maximum amount of inserted delay divided by Ri. For example, if a maximum delay is fifty (50) milliseconds and Ri is equal to ten (10) milliseconds, then the delay buffer 502 has to be able to accommodate at least five packets 510. As shown in Figure 5, the packets 510 can fill the delay buffer 502 as well as a portion of the assembly area 504.

When a DTMF digit is detected, the injected amount of delay into the delay buffer 502 can be determined such that the amount of in-band DTMF leak should not cause double DTMF digits. It is recommended to process packet enquing into the delay buffer 502 prior to packet dequeuing from the delay buffer 502 to avoid additional processing delay. Recommended values for the delay can depend on the configured DTMF detection report times and Ri. If for example, Ri is ten (10) milliseconds, the recommended values can be:

| Configured DTMF Detection Report Time | Inserted Delay |
|---|---|
| 32ms | 30ms |
| 48ms | 50ms |
| 64ms | 70ms |

The data structures and code, in which the present disclosure can be implemented, can typically be stored on a non-transitory computer-readable storage medium. The storage can be any device or medium that can store code and/or data for use by a computer system. The non-transitory computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The methods and processes described in the disclosure can be embodied as code and/or data, which can be stored in a non-transitory computer-readable storage medium as described above. When a computer system reads and executes the code and/or data stored on the non-transitory computer-readable storage medium, the computer system performs the methods and processes embodied as data structures and code and stored within the non-transitory computer-readable storage medium. Furthermore, the methods and processes described can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The technology described herein can be implemented as logical operations and/or modules. The logical operations can be implemented as a sequence of processor-implemented executed steps and as interconnected machine or circuit modules. Likewise, the descriptions of various component modules can be provided in terms of operations executed or effected by the modules. The resulting implementation is a matter of choice, dependent on the performance requirements of the underlying system implementing the described technology. Accordingly, the logical operations making up the embodiment of the technology described herein are referred to variously as operations, steps, objects, or modules. It should be understood that logical operations can be performed in any order, unless explicitly claimed otherwise or a specific order is inherently necessitated by the claim language.

Various embodiments of the present disclosure can be programmed using an object-oriented programming language, such as SmallTalk, Java, C++, Ada or C#. Other object-oriented programming languages can also be used. Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are intended to be encompassed by the claims. Moreover, nothing disclosed herein is intended to be dedicated to the public regardless of whether such disclosure is explicitly recited in the claims.

## Claims

1. A method for preventing double digit detection in a downstream circuit-switched network caused by in-band DTMF leaks when a voice path goes through a packet-switched network and out-of-band DTMF is used within the packet-switched network, the method comprising:
initialising (300) a delay buffer (502, 504) in a time division multiplex to packet network direction with an audio pattern that represents silence in a configurable amount of delay;
receiving audio;
packetizing the audio into the delay buffer;
when a DTMF digit is detected: discontinuing packetisation of the audio, stopping taking audio from the delay buffer, and injecting (404) DTMF signalling packets for the DTMF digit;
discarding (306) contents within the delay buffer;
filling (306) the delay buffer with a silence pattern; and
once the end of the DTMF digit is detected: continuing (408) packetisation of the audio.

2. The method of claim 1, wherein the amount of delay added to the delay buffer is configurable on a per call basis.

3. The method of either preceding claim, comprising receiving the audio from a circuit-switched network.

4. The method of any preceding claim, wherein the delay buffer is a T2P delay buffer.

5. The method of any preceding claim, wherein discarding contents within the delay buffer comprises removing an in-band DTMF leak within the delay buffer.

6. The method of any preceding claim, wherein the packets injected into the stream for the DTMF digit are RFC4733 DTMF.

7. The method of any preceding claim, comprising filling a remaining amount of the configurable amount of delay into at least one additional packet outside of the delay buffer.

8. The method of claim 6 or claim 7, comprising determining a time to detect the DTMF digit to add the configurable amount of delay.

9. A device (104) for preventing double digit detection in a downstream circuit-switched network caused by in-band DTMF leaks when a voice path goes through a packet-switched network and out-of-band DTMF is used within the packet-switched network, the device being configured:
to initialise a delay buffer (502, 504) in a time division multiplex to packet interface block (214) with an audio pattern that represents silence in a configurable amount of delay;
to receive audio;
to packetize the audio into the delay buffer to packet network direction;
when a DTMF digit is detected: to discontinue packetisation of the audio, to inject DTMF signalling packets for the DTMF digit, and to stop taking audio from the delay buffer;
to discard contents within the delay buffer;
to add a silence pattern to the delay buffer; and
once the end of the DTMF digit is detected: to continue packetisation of the audio.

10. The device of claim 9, wherein the amount of silence is dependent on a detection time of the DTMF digit.

11. The device of claim 9 or claim 10, wherein the DTMF digit is detected when the audio represents the DTMF digit for more than forty milliseconds.

12. The device of any of claims 9 to 11, wherein a new DTMF digit is detected when the audio is interrupted between ten milliseconds to twenty milliseconds.

13. The device of any of claims 9 to 12, wherein the packets injected into the stream for the DTMF digit are RFC4733 DTMF.

14. A device as claimed in any of claims 9 to 13, wherein the delay buffer is a T2P delay buffer.

15. The device of claim 14, configured to place additional delay into at least one packet outside of said the T2P delay buffer, and/or wherein the T2P delay buffer holds a minimum number of packets to accommodate a maximum amount of the delay.

## Patentansprüche

1. Verfahren zum Verhindern einer doppelten Ziffernerkennung in einem nachgelagerten leitungsvermittelten Netzwerk, die durch bandinterne DTMF-Lecks verursacht wird, wenn ein Sprachkanal ein paketvermitteltes Netzwerk durchquert und bandexternes DTMF in dem paketvermittelten Netzwerk verwendet wird, wobei das Verfahren Folgendes umfasst:
Initialisieren (300) eines Verzögerungspuffers (502, 504) in einem Zeitmultiplexverfahren in Paketnetzwerkrichtung mit einem Audiomuster, das Stille in einem konfigurierbaren Verzögerungsbetrag darstellt;
Empfangen von Audio;
Paketieren des Audios in den Verzögerungspuffer;
wenn eine DTMF-Ziffer erkannt wird: Abbrechen der Paketierung des Audios, Stoppen des Entnehmens von Audio aus dem Verzögerungspuffer, und Einspeisen (404) von DTMF-Signalisierungspaketen für die DTMF-Ziffer;
Verwerfen (306) von Inhalten im Verzögerungspuffer;
Füllen (306) des Verzögerungspuffers mit einem Stille-Muster; und
sobald das Ende der DTMF-Ziffer erkannt wird: Fortfahren (408) mit der Paketierung des Audios.

2. Verfahren nach Anspruch 1, wobei der dem Verzögerungspuffer hinzugefügte Verzögerungsbetrag für jeden einzelnen Anruf konfigurierbar ist.

3. Verfahren nach einem der vorhergehenden Ansprüche, das das Empfangen des Audios von einem leitungsvermittelten Netzwerk umfasst.

4. Verfahren nach einem der vorhergehenden Ansprüche, wobei der Verzögerungspuffer ein T2P-Verzögerungspuffer ist.

5. Verfahren nach einem der vorhergehenden Ansprüche, wobei das Verwerfen von Inhalten im Verzögerungspuffer das Entfernen eines bandinternen DTMF-Lecks im Verzögerungspuffer umfasst.

6. Verfahren nach einem der vorhergehenden Ansprüche, wobei die in den Strom für die DTMF-Ziffer eingespeisten Pakete RFC4733-DTMF sind.

7. Verfahren nach einem der vorhergehenden Ansprüche, das das Füllen eines Restbetrags des konfigurierbaren Verzögerungsbetrags in mindestens ein zusätzliches Paket außerhalb des Verzögerungspuffers umfasst.

8. Verfahren nach Anspruch 6 oder Anspruch 7, das das Bestimmen einer Zeit umfasst, um die DTMF-Ziffer zu erkennen, um den konfigurierbaren Verzögerungsbetrag hinzuzufügen.

9. Vorrichtung (104) zum Verhindern einer doppelten Ziffernerkennung in einem nachgeschalteten leitungsvermittelten Netzwerk, die durch bandinterne DTMF-Lecks verursacht wird, wenn ein Sprachkanal ein paketvermitteltes Netzwerk durchquert und bandexternes DTMF im paketvermittelten Netzwerk verwendet wird, wobei die Vorrichtung konfiguriert ist zum:
Initialisieren eines Verzögerungspuffers (502, 504) in einem Zeitmultiplexverfahren zum Paketschnittstellenblock (214) mit einem Audiomuster, das Stille in einem konfigurierbaren Verzögerungsbetrag darstellt;
Empfangen von Audio;
Paketieren des Audios in den Verzögerungspuffer in Paketnetzwerkrichtung;
wenn eine DTMF-Ziffer erkannt wird: Abbrechen der Paketierung des Audios, Einspeisen von DTMF-Signalisierungspaketen für die DTMF-Ziffer und Stoppen des Entnehmens von Audio aus dem Verzögerungspuffer;
Verwerfen von Inhalten im Verzögerungspuffer;
Hinzufügen eines Stille-Musters zu dem Verzögerungspuffer; und
sobald das Ende der DTMF-Ziffer erkannt wird: Fortfahren mit der Paketierung des Audios.

10. Vorrichtung nach Anspruch 9, wobei die Menge an Stille von einer Erkennungszeit der DTMF-Ziffer abhängt.

11. Vorrichtung nach Anspruch 9 oder Anspruch 10, wobei die DTMF-Ziffer erkannt wird, wenn das Audio die DTMF-Ziffer für mehr als vierzig Millisekunden darstellt.

12. Vorrichtung nach einem der Ansprüche 9 bis 11, wobei eine neue DTMF-Ziffer erkannt wird, wenn das Audio zehn Millisekunden bis zwanzig Millisekunden lang unterbrochen ist.

13. Vorrichtung nach einem der Ansprüche 9 bis 12, wobei die in den Strom für die DTMF-Ziffer eingespeisten Pakete RFC4733-DTMF sind.

14. Vorrichtung nach einem der Ansprüche 9 bis 13, wobei der Verzögerungspuffer ein T2P-Verzögerungspuffer ist.

15. Vorrichtung nach Anspruch 14, die konfiguriert ist, um eine zusätzliche Verzögerung in mindestens ein Paket außerhalb des T2P-Verzögerungspuffers einzufügen, und/oder wobei der T2P-Verzögerungspuffer eine minimale Anzahl von Paketen hält, um einen maximalen Verzögerungsbetrag aufzunehmen.

## Revendications

1. Procédé permettant d'empêcher la détection des éléments numériques doubles dans un réseau à commutation de circuits aval provoquée par des fuites de DTMF intra-bande lorsqu'un trajet vocal traverse un réseau à commutation de paquets et la DTMF hors bande est utilisée au sein du réseau à commutation de paquets, le procédé comprenant :
l'initialisation (300) d'un tampon de décalage (502, 504) dans une direction multiplex à division de temps vers réseau par paquets avec un motif audio qui représente un silence dans une quantité configurable de décalage ;
la réception de signaux audio ;
le paquetage des signaux audio dans le tampon de décalage ;
lorsqu'un élément numérique DTMF est détecté : l'interruption du paquetage des signaux audio, l'arrêt de la prise de signaux audio en provenance du tampon de décalage, et l'injection (404) de paquets de paquets de signalisation DTMF pour l'élément numérique DTMF ;
l'élimination (306) du contenu au sein du tampon de décalage ;
le remplissage (306) du tampon de décalage avec un motif de silence ; et
dès que la fin de l'élément numérique DTMF est détectée : la poursuite (408) du paquetage des signaux audio.

2. Procédé selon la revendication 1, ladite quantité de décalage ajoutée au tampon de décalage étant configurable appel par appel.

3. Procédé selon l'une quelconque des revendications précédentes, comprenant la réception des signaux audio provenant d'un réseau à commutation de circuits.

4. Procédé selon l'une quelconque des revendications précédentes, ledit tampon de décalage étant un tampon de décalage T2P.

5. Procédé selon l'une quelconque des revendications précédentes, ladite élimination de contenu au sein du tampon de décalage comprenant la suppression d'une fuite de DTMF intra-bande au sein du tampon de décalage.

6. Procédé selon l'une quelconque des revendications précédentes, lesdits paquets injectés dans le flux pour l'élément numérique DTMF étant des DTMF RFC4733.

7. Procédé selon l'une quelconque des revendications précédentes, comprenant le remplissage d'une quantité restante de la quantité configurable de décalage dans au moins un paquet supplémentaire à l'extérieur du tampon de décalage.

8. Procédé selon la revendication 6 ou 7, comprenant la détermination d'une durée pour détecter l'élément numérique DTMF afin d'ajouter la quantité configurable de décalage.

9. Dispositif (104) permettant d'empêcher la détection des éléments numériques doubles dans un réseau à commutation de circuits aval provoquée par des fuites de DTMF intra-bande lorsqu'un trajet vocal traverse un réseau à commutation de paquets et la DTMF hors bande est utilisée au sein du réseau à commutation de paquets, le dispositif étant conçu pour :
initialiser un tampon de décalage (502, 504) dans un bloc multiplex à division de temps vers réseau par paquets (214) avec un motif audio qui représente un silence dans une quantité configurable de décalage ;
recevoir des signaux audio ;
mettre en paquets des signaux audio dans la direction tampon de décalage vers réseau par paquets ;
lorsqu'un élément numérique DTMF est détecté : interrompre le paquetage des signaux audio, injecter des paquets de signalisation DTMF pour l'élément numérique DTMF, et arrêter la prise de signaux audio en provenance du tampon de décalage ;
éliminer le contenu au sein du tampon de décalage ;
ajouter un motif de silence dans le tampon de décalage ; et
dès que la fin de l'élément numérique DTMF est détectée : poursuivre le paquetage des signaux audio.

10. Dispositif selon la revendication 9, ladite quantité de silence étant dépendante d'une durée de détection de l'élément numérique DTMF.

11. Dispositif selon la revendication 9 ou 10, ledit élément numérique DTMF étant détecté lorsque les signaux audio représentent l'élément numérique DTMF pendant plus de quarante millisecondes.

12. Dispositif selon l'une quelconque des revendications 9 à 11, un nouvel élément numérique DTMF étant détecté lorsque les signaux audio sont interrompus entre dix millisecondes à vingt millisecondes.

13. Dispositif selon l'une quelconque des revendications 9 à 12, lesdits paquets injectés dans le flux pour l'élément numérique DTMF étant des DTMF RFC4733

14. Dispositif selon l'une quelconque des revendications 9 à 13, ledit tampon de décalage étant un tampon de décalage T2P.

15. Dispositif selon la revendication 14, configuré pour placer un décalage supplémentaire au sein d'au moins un paquet à l'extérieur dudit tampon de décalage T2P, et/ou ledit tampon de décalage T2P conservant un nombre minimal de paquets pour contenir une quantité maximale du décalage.
